# EUROPÄISCHE PATENTSCHRIFT

(11) **EP 1 775 651 B1**
(45) Veröffentlichungstag und Bekanntmachung des Hinweises auf die Patenterteilung: **30.04.2008**
(21) Anmeldenummer: 06020761.0
(22) Anmeldetag: 02.10.2006
(51) Int. Cl.: G06F 1/16

(54) **Verriegelungsvorrichtung**
Locking device
Dispositif de verrouillage

(30) Priorität: 13.10.2005 DE 102005049048
(43) Veröffentlichungstag der Anmeldung: 18.04.2007
(73) Patentinhaber: Fujitsu Siemens Computers GmbH, 80807 München (DE)
(72) Erfinder: Seybold, Richard, 89407 Dillingen (DE)
(74) Vertreter: Epping - Hermann - Fischer

(56) Entgegenhaltungen:
- EP-A2- 0 466 677
- US-A1- 2003 048 600
- US-B1- 6 256 194
- US-B1- 6 927 972

## Beschreibung

Die Erfindung betrifft eine Verriegelung eines Notebook-Computergehäuses, wobei das Notebook-Computergehäuse eine erste Komponente (5) und eine mit dieser klappbar verbundene zweite Komponente (6) umfasst, die in einer Verriegelungsrichtung zusammengeführt werden können.

Verriegelungsvorrichtungen, insbesondere Verriegelungsvorrichtungen für Notebook-Computergehäuse, sind der Anmelderin aus einem eigenen Stand der Technik bekannt. Druckschriftlich ist er veröffentlicht in "Lifebook C Series"; Fujitsu Siemens Computers; Ausgabe Juli 2002.

Ein Notebook-Computergehäuse, dessen zwei Gehäusehälften klappbar miteinander verbunden sind, wird über eine Verriegelungseinrichtung verriegelt. Im verriegelten Zustand ist der Notebook-Computer geschlossen und die Bedien- und Anzeigeelemente des Notebook-Computers sind vor mechanischer Beeinträchtigung geschützt. Dazu ist eine Verriegelungsvorrichtung vorgesehen, die mit einem Rastelement, einem Bedienelement, einem Federelement und einem Gegenrastelement so ausgebildet ist, dass das Rastelement im Verriegelungszustand in das Gegenrastelement einrastet. Zum Öffnen wird die Verriegelungseinrichtung mittels des Bedienelementes in einer vorbestimmten Richtung entgegen einer Federkraft des Federelementes bewegt, wodurch das Rastelement die Verriegelungsposition mit dem Gegenrastelement verlässt und die Verriegelung damit offen ist. Zum Verschließen genügt es, die beiden Gehäusehälften des Notebooks zusammen zu klappen, wodurch das Rastelement in das Gegenrastelement eintaucht und mit diesem verrastet.

Befinden sich im Arbeitsalltag Dokumente zwischen den beiden Gehäusehälften des Notebooks, so werden diese in der Verriegelungsvorrichtung eingeklemmt und mit dem Rastelement beschädigt. Des Weiteren besteht an jenem vorstehenden Rastelement Verletzungsgefahr bei der Arbeit mit dem Notebook-Computer und nicht zuletzt kann ein vorstehendes Rastelement durch einen Fremdkörper auch zerstört werden, indem es durch die Krafteinwirkung des Fremdkörpers bricht. Eine aufwändige Reparatur ist dann erforderlich.

Aus der Druckschrift US 2003/0048600 A1 ist eine Verriegelung eines Notebook-Computergehäuses bekannt, wobei das Notebook-Computergehäuse eine erste Komponente und eine mit dieser klappbar verbundene zweite Komponente umfasst. Dabei können die beiden Komponenten des Notebook-Computergehäuses in einer Verriegelungsrichtung zusammengeführt werden. Die Verriegelungsvorrichtung der Druckschrift US 2003/0048600 A1 zeigt ein vorstehendes Rastelement an der ersten Komponente und ein Gegenrastelement an der zweiten Komponente, wobei das Rastelement und das Gegenrastelement in einer verriegelten Position der Komponenten zusammenwirken. Gemäß der Druckschrift US 2003/0048600 A1 ist das Rastelement derart beweglich gelagert, dass es an beiden Seiten der ersten Komponente wahlweise hervorstehen kann, um mit der zweiten Komponente des Notebookcomputers verriegelbar zu sein. Die zweite Komponente ist gegenüber der ersten Komponente nicht nur schwenkbar, sondern auch drehbar gelagert. Somit ist die Beweglichkeit des hervorstehenden Rastelements darauf gerichtet, zu beiden Seiten der drehbar gelagerten zweiten Komponente eine Verriegelung zu ermöglichen. Dabei steht das Rastelement wahlweise zur einen Seite oder zur anderen Seite der ersten Komponenten hervor.

Aus der Druckschrift US 6,256,194 B1 ist ebenfalls eine Verriegelung eines Notebook-Computergehäuses bekannt, wobei das Notebook-Computergehäuse eine erste Komponente und eine mit dieser klappbar verbundene zweite Komponente umfasst. Auch hierbei können die Komponenten in einer Verriegelungsrichtung zusammengeführt werden und weisen ein vorstehendes Rastelement an der ersten Komponente und ein Gegenrastelement an der zweiten Komponente auf. Das Rastelement und das Gegenrastelement wirken in einer verriegelten Position der Komponenten zusammen. Das vorstehende Rastelement ist gemäß der Druckschrift US 6,256,194 B1 mit einem Zahnstangenantrieb gekoppelt, mit dem das vorstehende Rastelement entgegen einer Federkraft bewegbar ist. Dabei ist das vorstehende Rastelement drehbar gelagert, und wird mittels eines Zahnkranzes in Verbindung mit der Zahnstange und einem federnd gelagerten Halteelement in einer offenen Position gehalten. Die offene Position ist eine versenkte Position. Dort verbleibt das Rastelement solange, bis das federnd gelagerte Halteelement versehentlich oder beim Schließen des Notebook-Computergehäuses, gelöst wird. Nach dem Lösen schwenkt das Rastelement in eine hervorstehende Position.

Aus der Druckschrift US 6,927,972 B1 ist ebenfalls eine Verriegelung eines Notebook-Computergehäuses bekannt, wobei das Notebook-Computergehäuse eine erste Komponente und eine mit dieser klappbar verbundene zweite Komponente umfasst. Auch gemäß der Druckschrift US 6,927,972 B1 können die beiden Komponenten des Notebook-Computergehäuses in einer Verriegelungsrichtung zusammengeführt werden. Diese Verriegelungsvorrichtung weist ein Rastelement an der ersten Komponente und ein Gegenrastelement an der zweiten Komponente auf, wobei das Rastelement und das Gegenrastelement in einer verriegelten Position der Komponenten zusammenwirken. Die Lagerung des vorstehenden Rastelements ist derart ausgebildet, dass das vorstehende Rastelement versenkbar ausgebildet ist. Das Rastelement wird mittels eines Halteelementes in der versenkten Position gehalten. Ähnlich dem in der Druckschrift US 6,256,194 B1 gezeigten Gegenstand ist das Haltelement auch bei dem in Druckschrift US 6,927,972 B1 gezeigten Gegenstand versehentlich leicht lösbar. Als Folge daraus taucht das Rastelement aus der versenkten Position auf und bildet ein hervorstehendes Rastelement und stellt so ein Verletzungsrisiko für einen Anwender dar.

Es ist demzufolge die Aufgabe der Erfindung eine Verriegelungsvorrichtung für ein Notebook-Computergehäuse vorzusehen, bei der das Verletzungsrisiko durch die Verriegelungseinrichtung und das Zerstörungsrisiko für die Verriegelungseinrichtung insbesondere für deren hervorstehendes Rastelement minimiert ist.

Diese Aufgabe wird durch die Maßnahmen des Patentanspruchs 1 gelöst und durch die Maßnahmen der untergeordneten Patentansprüche in vorteilhafter Weise weitergebildet.

Zur Lösung der Aufgabe ist demzufolge eine Verriegelungsvorrichtung gemäß dem Oberbegriff des geltenden Patentanspruchs 1 derart weitergebildet, dass das vorstehende Rastelement beweglich gelagert und eine Lagerung des vorstehenden Rastelements derart eingerichtet ist, dass bei Ausübung einer Kraft in der Verriegelungsrichtung auf das vorstehende Rastelement das vorstehende Rastelement nachgibt.

Durch das Nachgeben des vorstehenden Rastelements ist in vorteilhafter Weise erreicht, dass das Verletzungsrisiko vermindert ist. Dies begründet sich darin, dass ein vorstehendes Rastelement, das nachgibt, wenn darauf eine Kraft wirkt, seinerseits nicht genug Gegenkraft vorhält, um einen Fremdkörper wie einen Gegenstand, ein Blatt Papier oder die Haut eines Benutzers zu beschädigen oder zu verletzen. Darüber hinaus wird vorteilhaft vermieden, dass ein Anwender unvorbereitet sich an einem hervorstehenden Rastelement verletzen kann, da ein versehentliches "Auslösen" eines Haltemechanismus für das Rastelement vermieden ist. Alleine dadurch, dass das hervorstehende Rastelement beweglich gelagert ist, und die Lagerung des Rastelements bewirkt, dass bei Ausübung einer Kraft in der Verriegelungsrichtung auf das vorstehende Rastelement dieses nachgibt, lassen sich Verletzungen an dem hervorstehenden Rastelement vermeiden.

Eine vorteilhafte Ausführungsform der Erfindung sieht vor, das vorstehende Rastelement so zu gestalten, dass es soweit nachgibt, dass es bündig mit einer Oberfläche der ersten Komponente abschließt. Damit ist das Risiko, sich an dem vorstehenden Rastelement zu verletzen, auf nahezu Null reduziert, da das Rastelement vollständig in der ersten Komponente versenkt ist.

Ist das vorstehende Rastelement, wie in einer weiteren vorteilhaften Ausführungsform vorgesehen, federnd gelagert, so ist damit nicht nur das Verletzungsrisiko deutlich vermindert, sondern es ist auch sichergestellt, dass das Rastelement nach dem Einwirken des Fremdkörpers wieder in eine Arbeitsposition zurückfedert. Die federnde Lagerung wird durch ein Federelement bewirkt, dessen Federkraft entgegen der durch den Fremdkörper eingebrachten Kraft gerichtet ist. Es ist dabei die Federkraft des Federelements so gering dimensioniert, dass sie gerade ausreicht um das vorstehende Rastelement in die Arbeitsposition zurückzubewegen, aber zu gering ist, um einem Fremdkörper so kraftvoll entgegenzuwirken, dass entweder der Fremdkörper oder das Rastelement Schaden nimmt. Ebenso ist die Federkraft des Federelementes auch so dimensioniert, dass sie kraftvoll genug ist um im Zusammenwirken des vorstehenden Rastelements mit dem Gegenrastelement ein einander Einrasten der beiden Rastelemente zu bewirken.

Eine weitere vorteilhafte Ausführungsform sieht vor, das vorstehende Rastelement schwenkbar in der ersten Komponente zu lagern. Dies bietet auch in Bezug auf die Herstellungskosten einen Vorteil, da ein schwenkbares Rastelement sehr einfach durch eine axiale Lagerung des vorstehenden Rastelements herstellbar ist.

Zur Bedienung der Verriegelungsvorrichtung ist in einer vorteilhaften Ausführungsform ein Bedienelement vorgesehen, das mit dem vorstehenden Rastelement gekoppelt ist. Alternativ ist eine Koppelung des Bedienelementes mit dem Gegenrastelement vorgesehen. Mittels der Koppelung des Bedienelementes mit dem vorstehenden Rastelement oder dem Gegenrastelement ist die Verriegelung lösbar, indem das Zusammenwirken von vorstehendem Rastelement mit dem Gegenrastelement gelöst wird.

Bei Notebookcomputern ist der Anwender häufig durch die Funktionsvielfalt des Gerätes von der Verriegelungsvorrichtung abgelenkt. Diese Ablenkung führt in der Folge zu einer Nichtbeachtung des vorstehenden Rastelementes der Verriegelungseinrichtung und damit zu Verletzungen des Benutzers oder zu Beschädigungen des Rastelements. Ein vorstehendes Rastelement gemäß der Erfindung verhindert eine Beschädigung des vorstehenden Rastelements und auch eine Verletzung durch das vorstehende Rastelement.

Hierbei ist es günstig, wenn das Gegenrastelement eine Ausnehmung in der zweiten Komponente ist, wobei dies noch durch einen Rastvorsprung in der zweiten Komponente und damit auch durch einen Rastvorsprung in der Ausnehmung besonders vorteilhaft erweitert ist.

Die Erfindung schlägt in einer vorteilhaften Ausführungsform ein über eine Drehachse mit dem Bedienelement verbundenes vorstehendes Rastelement vor, so dass das Rastelement entgegen der Verriegelungsrichtung drehbar ist. Beim Auftreten eines Hindernisses beim Verriegelungsvorgang bewegt sich das Rastelement durch den Widerstand, der durch das Hindernis gebildet ist, in eine zur Aufnahme des vorstehenden Rastelements vorgesehene Aussparung der ersten Gehäusehälfte hinein. Somit ist vorteilhaft sichergestellt, dass weder ein Verletzungsrisiko besteht, noch Gegenstände, noch das Rastelement selbst beim Verriegelungsvorgang beschädigt werden. Weiter vorteilhaft ist, dass die eigentliche Funktion des Rastelements dennoch gewährleistet ist, da das Rastelement im Normalbetrieb, also bei einem Verriegelungsvorgang ohne ein Hindernis ungehindert in das Gegenrastelement eingreift.

In einer weiteren vorteilhaften Ausführungsform ist die Verriegelungsvorrichtung um ein Federelement erweitert, das am Achsgelenk des vorstehenden Rastelements angeordnet ist. Es ist vorteilhaft, das Federelement entweder als Spiralzug-, Spiraldruck- oder Spiraldrehfeder so auszugestalten, dass es eine Kraft in Verriegelungsrichtung auf das Rastelement ausübt. Steht ein Hindernis beim Verriegelungsvorgang entgegen, so wird das vorstehende Rastelement entgegen der Federkraft des Federelementes in die Aussparung hinein bewegt. Wird das Hindernis entfernt, so taucht das vorstehende Rastelement aus der Aussparung, getrieben durch die Federkraft des Federelements, wieder hervor.

Weiter vorteilhaft ist, dass sich eine solche Ausführung der Erfindung auch noch vorteilhaft auf den Verriegelungsvorgang an sich auswirkt, da die Drehbewegung auch beim ungehinderten Verriegelungsvorgang ein leichteres Eintauchen des vorstehenden Rastelements in die Ausnehmung gewährleistet, da das vorstehende Rastelement vor dem Einrasten an der Überlappung durch diese zur Seite bewegt wird. Der Kraftaufwand, der erforderlich ist, um das Rastelement in die Ausnehmung bis zu seiner Endposition einzuführen ist dadurch geringer.

In einer weiteren vorteilhaften Ausführungsform ist das vorstehende Rastelement durch eine Führungsbuchse beweglich gelagert. In dieser Führungsbuchse ist das vorstehende Rastelement wie ein Kolben gelagert und in zwei Richtungen beweglich. Die dadurch gebildete Beweglichkeit zeichnet sich dadurch aus, dass entgegen der Verriegelungsrichtung das vorstehende Rastelement beim Auftreten eines Hindernisses beim Verriegelungsvorgang zurückweicht beziehungsweise in eine zur Aufnahme des vorstehenden Rastelements vorgesehene Ausnehmung in der ersten Komponente eintauchen kann. Somit stellt auch diese Ausführungsform in vorteilhafter Weise sicher, dass das Verletzungsrisiko minimiert ist. Auch das Risiko, Gegenstände oder das Rastelement an sich beim Verriegelungsvorgang zu beschädigen, ist damit in vorteilhafter Weise minimiert.

In einer weiteren vorteilhaften Ausführungsform ist die durch die Führungsbuchse und die kolbenartige Lagerung des Rastelements innerhalb der Führungsbuchse gebildete, bewegliche Verbindung zwischen dem Bedienelement und dem vorstehenden Rastelement durch ein Federelement vorteilhaft ergänzt. Dieses Federelement, das zum Beispiel als Spiralzug- oder Spiraldruckfeder ausgeführt ist, übt eine gerichtete Kraft auf das vorstehende Rastelement aus. Ist beim Verriegelungs-vorgang ein Hindernis vorhanden, das dem Eintauchen des Rastelements in die Ausnehmung entgegen steht, so wird durch das Hindernis das vorstehende Rastelement entgegen der Verriegelungsrichtung und entgegen der Federkraft des weiteren zweiten Federelements in die Aussparung hinein gedrückt. Nach dem Entfernen des Hindernisses taucht das vorstehende Rastelement, getrieben durch die Federkraft des Federelements, wieder aus der Aussparung auf und taucht beim Fortsetzen des Verriegelungsvorganges in die Ausnehmung ein und rastet an der Überlappung der Ausnehmung ein.

Die erfindungsgemäße Verriegelungsvorrichtung eignet sich aufgrund ihrer vorteilhaften Eigenschaften besonders für Notebook Computer. Dies schließt jedoch nicht die Verwendung an anderen Geräten oder Behältnissen aus.

Im Folgenden ist die Erfindung unter Zuhilfenahme von vier Figuren näher erläutert. Es zeigen:
Figur 1 eine Verriegelungsvorrichtung nach einem firmeninternen Stand der Technik der Anmelderin,
Figur 2 eine Verriegelungsvorrichtung mit Achsgelenk,
Figur 3 eine Verriegelungsvorrichtung mit Führungsbuchse und kolbenartiger Lagerung des vorstehenden Rastelements,
Figur 4 eine Verriegelungsvorrichtung mit beweglichem Gegenrastelement
Figur 5 eine abgewinkelte Verriegelungsvorrichtung mit Achsgelenk,
Figur 6 einen Notebook-Computer mit einer erfindungsgemäßen Verriegelungsvorrichtung.

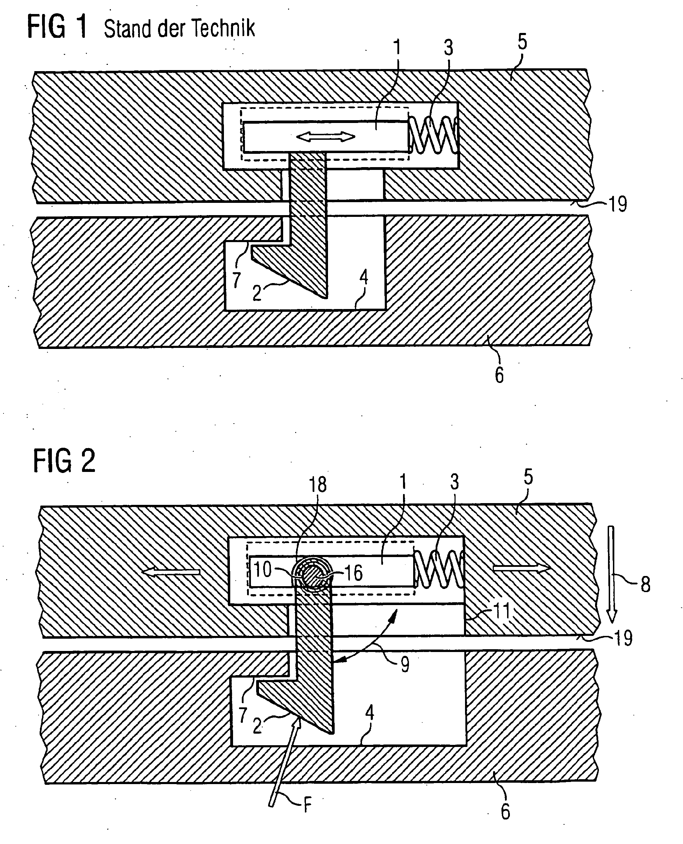

Die Figur 1 zeigt eine Verriegelungsvorrichtung nach dem firmeninternen Stand der Technik der Anmelderin, hierbei ist ein vorstehendes Rastelement 2 fest und unbeweglich mit einem Bedienelement gekoppelt. Das Bedienelement 1, das in vielfältigen Formen realisierbar ist, ist in der Darstellung der Figur 1 zur besseren Übersichtlichkeit der dahinter liegenden Komponenten nur schematisch dargestellt. Die äußerliche Gestaltung des Bedienelementes 1 ist für die Funktion der erfindungsgemäßen Verriegelungsvorrichtung von untergeordneter Bedeutung. Eine Feder 3 wirkt mit seiner Federkraft auf das Bedienelement 1 und damit auch unmittelbar auf das vorstehende Rastelement 2 in eine Richtung. Bedienelement 1, Feder 3 und vorstehendes Rastelement 2 sind an einer ersten Komponente 5 eines Notebook-Computergehäuses angeordnet. An einer zweiten Komponente 6 des Notebook-Computergehäuses sind ein Gegenrastelement 4 und ein darin angeordneter Rastvorsprung 7 angeordnet. Die Federkraft der Feder 3 ist so gerichtet, dass das vorstehende Rastelement 2 an dem Gegenrastelement 7 einrastet, so dass zum Lösen der Verriegelungsvorrichtung eine Kraft entgegen dieser Federkraft über das Bedienelement 1 auf die Verriegelungsvorrichtung einzubringen ist. Beim Verrasten trifft das vorstehende Rastelement 2 mit einer Schräge auf den Rastvorsprung 7. Dadurch wird eine senkrecht zur Verriegelungsrichtung wirkende Kraft erzeugt, die auf die Feder 3 einwirkt.

Das vorstehende Rastelement 2 ist im Verriegelungszustand in das Gegenrastelement 4 eingerastet, so dass die beiden Rastelemente (2 und 4) zusammenwirken. Zum Lösen der Verriegelungsvorrichtung ist das Bedienelement 1 entgegen der Federkraft der Feder 3 zu bewegen, und damit das Zusammenwirken der beiden Rastelemente (2 und 4) aufzulösen.

Die Figur 2 zeigt eine bevorzugte und vorteilhafte Ausführungsform der erfindungsgemäßen Verriegelungsvorrichtung, bei der das vorstehende Rastelement 2 mit dem Bedienelement 1 über ein Achsgelenk 16 beweglich verbunden ist, so dass das vorstehende Rasteelement 2 zum Bedienelement 1 um diese Achse drehbar ist. Somit ist eine Lagerung 10 gebildet, in der das vorstehende Rastelement beweglich gelagert ist. Zusätzlich ist in der in Figur 2 gezeigten Ausführungsform ein Federelement 18, in der dargestellten Ausführungsform ein Spiralfederelement, angeordnet. Dieses übt auf das vorstehende Rastelement 2 eine gerichtete Kraft aus. Diese Kraft bewirkt, dass das vorstehende Rastelement 2 in einer Ruhelage, die senkrecht zur Bewegungsrichtung des Bedienelementes ist, solange verbleibt, bis eine weitere Kraft, zum Beispiel durch ein Hindernis oder einem Fremdkörper bei einem Verriegelungsvorgang auf das vorstehende Rastelement 2 einwirkt. Durch diese Kraft wird das vorstehende Rastelement 2 entgegen der Bewegungsrichtung 8 des Verriegelungsvorgangs und entgegen der Kraft des Federelementes 18 in eine Aussparung 11 an der ersten Komponente 5 bewegt. Somit taucht das hervorstehende Rastelement 2 in die Aussparung 11 ein, wenn sich ein Hindernis beim Verriegelungsvorgang zwischen dem vorstehenden Rastelement 2 und der zweiten Komponente 6 befindet. Ein auftretendes Hindernis beim Verriegelungsvorgang in Richtung der Verriegelungsrichtung 8 zwingt somit entgegen der Federkraft des Federelementes 18 das vorstehende Rastelement 2 in einer Drehbewegung 9 in eine Aussparung 11 hinein, so dass auch keine Verletzungsgefahr durch das vorstehende Rastelement 2 gegeben ist. Die Aussparung 11 ist so gestaltet, dass das vorstehende Rastelement 2 in diese Aussparung 11 soweit eintaucht, dass kein Anteil des vorstehenden Rastelements 2 über die Oberfläche 19 der ersten Komponente ragt. Im Falle eines Zurückweichens des Hindernisses dreht das vorstehende Rastelement 2 aufgrund der Federkraft des Federelementes 18 wieder zurück in seine Arbeitslage und rastet beim Verschließen der Verriegelungsvorrichtung in das Gegenrastelement 4 ein. Zum Öffnen beziehungsweise zum Entriegeln des in Figur 2 dargestellten Ausführungsbeispiels der erfindungsgemäßen Verriegelungsvorrichtung ist durch einen Bediener das Bedienelement 1 entgegen der Kraft der Feder 3 zu bewegen. Damit löst sich das vorstehende Rastelement 2 aus dem Gegenrastelement 7 heraus, und die Verriegelungsvorrichtung ist geöffnet.

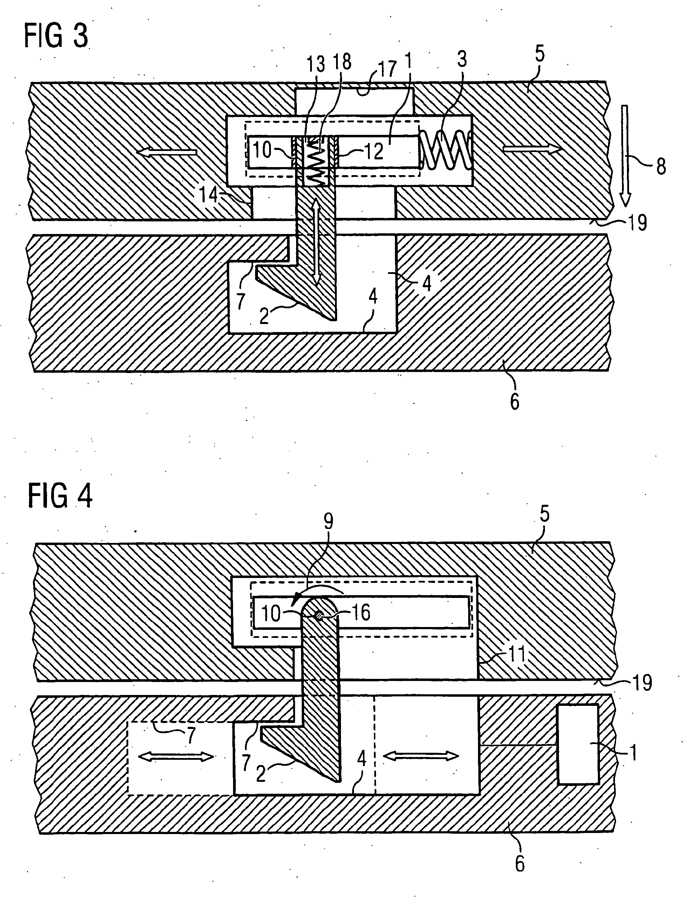

In Figur 3 ist ein weiteres Ausführungsbeispiel der erfindungsgemäßen Verriegelungsvorrichtung dargestellt, wobei auch diese Verriegelungsvorrichtung erfindungsgemäß so ausgestaltet ist, dass das vorstehende Rastelement 2 mittels einer Lagerung 10 so beweglich gelagert ist, dass zum einen die Grundfunktion des Verriegelns und Entriegelns durch das Bewegen des Bedienelementes 1 entgegen einer Federkraft der Feder 3 gegeben ist und zum anderen das vorstehende Rastelement 2 durch eine Führungsbuchse 12 so beweglich gelagert ist, dass es in die erste Komponente 5 eintauchen kann. Zusätzlich ist am vorstehenden Rastelement 2 eine Ausnehmung 13 vorgesehen, in der das Federelement 18 angeordnet ist, welches eine Kraft auf das vorstehende Rastelement in Richtung der Verriegelungsrichtung 8 ausübt. Als Federelement 18 eignen sich hierfür Spiraldruck- oder Spiralzugfedern. Im Ausführungsbeispiel ist eine Spiraldruckfeder dargestellt.

Im Falle eines auftauchenden Hindernisses beim Verschließen in Richtung der Verriegelungsrichtung 8 weicht das vorstehende Rastelement 2 in die erste Komponente 5 zurück. Dort ist zu diesem Zweck eine weitere Aussparung 17 vorgesehen, so dass das gesamte vorstehende Rastelement 2 eintauchen kann und es im eingetauchten Zustand mit der Oberfläche 19 der ersten Komponente zumindest bündig ist. Somit taucht das Rastelement 2 auch bei dieser Ausführungsform in die erste Komponente 5 ein und dies so weit, dass kein Stück des vorstehenden Rastelementes 2 über die Oberfläche 19 der ersten Komponente 5 ragt. Damit ist auch bei diesem Ausführungsbeispiel die Verletzungsgefahr minimiert. Beim Zurückweichen des Hindernisses taucht das vorstehende Rastelement 2 wieder aus der Komponente 5 hervor und nimmt seine Grund- beziehungsweise Arbeitsstellung ein. Im verriegelten Zustand wirk das vorstehende Rastelement 2 mit dem Gegenrastelement 4 zusammen und die beiden Rastelemente sind miteinander verrastet.

Zum Entriegeln der in Figur 3 dargestellten Ausführungsform der Verriegelungsvorrichtung ist das Bedienelement 1 entgegen der Federkraft der Feder 3 zu bewegen um das vorstehende Rastelement 2 aus seiner Zusammenwirkung mit dem Gegenrastelement 4 zu lösen und damit die Verriegelung zu öffnen.

Die Figur 4 zeigt ein Ausführungsbeispiel, bei dem das Gegenrastelement 4 beweglich in der zweiten Komponente 6 angeordnet ist und mit dem Bedienelement 1 gekoppelt ist. Hier ist das vorstehende Rastelement 2 mittels des Achsgelenks 16 drehbar gelagert. Somit ist eine Lagerung 10 gebildet, in der das vorstehende Rastelement beweglich gelagert ist, wie anhand von Figur 2 beschreiben wurde. Das vorstehende Rastelement 2 verbleibt solange in einer Ruhelage, bis eine Kraft, zum Beispiel durch ein Hindernis oder einen Fremdkörper bei einem Verriegelungsvorgang, auf das vorstehende Rastelement 2 einwirkt.

Zum Öffnen beziehungsweise zum Entriegeln des in Figur 2 dargestellten Ausführungsbeispiels der erfindungsgemäßen Verriegelungsvorrichtung ist durch einen Bediener das Bedienelement 1 zu bewegen, wodurch sich das Gegenrastelement 7 von dem vorstehenden Rastelement löst und die Verriegelungsvorrichtung öffnet.

Es ist sinnvoll, die Kraft des Federelementes 18 der erfindungsgemäßen Verriegelungsvorrichtung so auszulegen, dass auch empfindliche und verletzungsgefährdete Güter, Objekte und Personen diese Kraft leicht überwinden können, und dennoch ausreichend Kraft durch das Federelement 18 gebildet ist, dass ein Verriegelungsvorgang mit dem Gegenrastelement störungsfrei vonstatten geht.

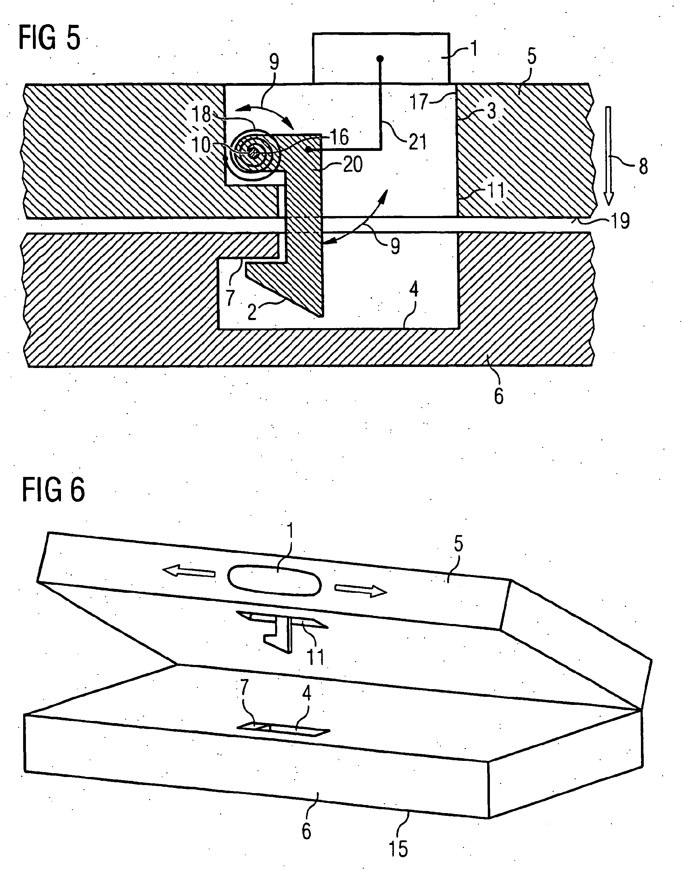

Die Figur 5 zeigt eine weitere bevorzugte und vorteilhafte Ausführungsform der erfindungsgemäßen Verriegelungsvorrichtung, bei der das vorstehende Rastelement 2 mit einer Abwinkelung 20 versehen ist. Diese Abwinkelung 20 ist nahe der Lagerung 10 angeordnet, und befindet sich in jeder Betriebssituation des vorstehenden Rastelements 2 innerhalb der ersten Komponente 5. Die Aussparung 11 ist mit der weiteren Aussparung 17 in dieser Ausführungsform zu einer großen Aussparung vereint, und damit zur Aufnahme des abgewinkelten vorstehenden Rastelements 2 größer als in den Ausführungsbeispielen der Figuren 3 und 4. Damit taucht das gesamte vorstehende Rastelement 2 auch in dieser Ausführungsform in die erste Komponente 5 soweit ein, dass kein Anteil des vorstehenden Rastelements 2 über die Oberfläche 19 der ersten Komponente 5 ragt. Die Abwinkelung 20 im Ausführungsbeispiel der Figur 5 ist in einem Winkel von etwa 90° dargestellt. Dennoch ist die Abwinkelung auch in einem anderen, zum Beispiel einem spitzen oder einem stumpfen Winkel möglich. Mit der Abwinkelung 20 wird erreicht, dass eine Hebelwirkung auf das Achsgelenk 16 wirkt und damit das Zurückweichen des vorstehenden Rastelements durch eine Drehbewegung erleichtert ist. Der Einfluss von Reibungskräften, die an dem vorstehenden Rastelement bei einem Zusammentreffen mit dem Fremdkörper, die Drehbewegung erschweren wird durch die Abwinkelung vermindert. Zusätzlich ist in der in Figur 5 gezeigten Ausführungsform das Federelement 18, in der dargestellten Ausführungsform ebenfalls wie in Figur 2 ein Spiralfederelement, angeordnet. Dieses übt auf das vorstehende Rastelement 2 eine gerichtete Kraft aus. Diese Kraft bewirkt, dass das vorstehende Rastelement 2 in einer Ruhelage solange verbleibt, bis eine weitere Kraft, zum Beispiel durch ein Hindernis oder einem Fremdkörper bei einem Verriegelungsvorgang auf das vorstehende Rastelement 2 einwirkt.

Durch diese Kraft wird das vorstehende Rastelement 2 entgegen der Bewegungsrichtung 8 des Verriegelungsvorgangs und entgegen der Kraft des Federelementes 18 in die Aussparung 11 an der ersten Komponente 5 bewegt. Der weitere Ablauf erfolgt wie er anhand der Figur 2 beschrieben wurde.

In Figur 6 ist ein Notebook-Computer 15 mit einer ersten Gehäusehälfte 5 und einer zweiten Gehäusehälfte 6 dargestellt, in der eine erfindungsgemäße Verriegelungsvorrichtung mit einem Bedienelement 1, einem vorstehenden Rastelement 2 und einem Gegenrastelement 4 mit einem Rastvorsprung 7 angeordnet ist. Dieses Ausführungsbeispiel stellt nur eine mögliche Verwendung der erfindungsgemäßen Verriegelungsvorrichtung dar, auch sind aus Gründen der besseren Darstellbarkeit unsichtbare Teilelemente der Erfindung in Figur 6 nicht dargestellt.

Zweifellos ist der Erfindungsgedanke auch anwendbar auf eine Vielzahl anderer Gegenstände beziehungsweise Gehäuse und Anwendungsbereiche, in denen zwei Komponenten lösbar miteinander zu verriegeln sind. Somit kann die im Folgenden aufgeführte Auflistung nur ein beispielhafter Ausschnitt der zahlreichen Verwendungsmöglichkeiten sein.

Verwendungs-, bzw. Einsatzmöglichkeiten der Verriegelungsvorrichtung gemäß dem vorgehend beschriebenen Prinzip sind:
1. Ein PDA
2. ein klappbares Mobilfunkgerät
3. eine Lebensmittelfrischhaltebox
4. ein Transportbehälter
5. eine Reisetasche
6. eine Damenhandtasche
7. ein Reisekoffer
und vieles mehr.

### Bezugszeichenliste

- 1: Bedienelement
- 2: Vorstehendes Rastelement
- 3: Feder
- 4: Gegenrastelement
- 5: erste Komponente
- 6: zweite Komponente
- 7: Rastvorsprung
- 8: Verriegelungsrichtung
- 9: Drehbewegung
- 10: Lagerung
- 11: Aussparung
- 12: Führungsbuchse
- 13: Aussparung am vorstehenden Rastelement
- 14: Zweite Aussparung
- 15: Notebook-Computer
- 16: Achsgelenk
- 17: weitere Aussparung
- 18: Federelement
- 19: Oberfläche der ersten Komponente
- 20: Abwinkelung
- 21: Koppelung

## Patentansprüche

1. Verriegelungsvorrichtung zur Verriegelung eines Notebook-Computergehäuses, wobei das Notebook-Computergehäuse eine erste Komponente (5) und eine mit dieser klappbar verbundene zweite Komponente (6) umfasst, die in einer Verriegelungsrichtung zusammengeführt werden können, aufweisend
- ein vorstehendes Rastelement (2) an der ersten Komponente (5) und
- ein Gegenrastelement (4) an der zweiten Komponente (6),
wobei das Rastelement (2) und das Gegenrastelement (4) in einer verriegelten Position der Komponenten (5 und 6) zusammenwirken,
**dadurch gekennzeichnet, dass**
das vorstehende Rastelement (2) beweglich gelagert und eine Lagerung (10) des vorstehenden Rastelements (2) derart eingerichtet ist, dass das vorstehende Rastelement (2) nachgibt, wenn eine Kraft in der Verriegelungsrichtung auf das vorstehende Rastelement (2) ausgeübt wird.

2. Verriegelungsvorrichtung nach Patentanspruch 1,
**dadurch gekennzeichnet, dass**
das vorstehende Rastelement (2) zumindest soweit nachgibt, dass es bündig mit einer Oberfläche (19) der ersten Komponente (2) abschließt.

3. Verriegelungsvorrichtung nach einem der Patentansprüche 1 bis 2,
**dadurch gekennzeichnet, dass**
das vorstehende Rastelement (2) federnd gelagert ist.

4. Verriegelungsvorrichtung nach einem der Patentansprüche 1 bis 3,
**dadurch gekennzeichnet, dass**
das vorstehende Rastelement (2) schwenkbar gelagert ist.

5. Verriegelungsvorrichtung nach einem der Patentansprüche 1 bis 4,
**dadurch gekennzeichnet, dass**
eine aus dem vorstehenden Rastelement (2) und dem Gegenrastelement (4) gebildete Rastverbindung mittels eines Bedienelementes (1), das mit dem vorstehenden Rastelement (2) oder dem Gegenrastelement (4) gekoppelt ist, lösbar ist.

6. Verriegelungsvorrichtung nach einem der Patentansprüche 1 bis 5,
**dadurch gekennzeichnet, dass**
das Gegenrastelement (4) eine Ausnehmung (4) in der zweiten Komponente (6) ist.

7. Verriegelungsvorrichtung nach einem der Patentansprüche 1 bis 6,
**dadurch gekennzeichnet, dass**
das Gegenrastelement (4) ein Rastvorsprung (7) an der zweiten Komponente ist.

8. Verriegelungsvorrichtung nach einem der Patentansprüche 1 bis 7,
**dadurch gekennzeichnet, dass**
ein Achsgelenk (16) vorgesehen ist, womit die Lagerung (10) des vorstehenden Rastelements (2) gebildet ist.

9. Verriegelungsvorrichtung nach einem der Patentansprüche 1 bis 8,
**dadurch gekennzeichnet, dass**
vorstehende Rastelement (2) mit einer Abwinkelung (20) versehen ist.

10. Verriegelungsvorrichtung nach einem der Patentansprüche 1 bis 9,
**dadurch gekennzeichnet, dass**
die Lagerung (10) des vorstehenden Rastelements (2) durch eine Führungsbuchse (12) gebildet ist, in der das vorstehende Rastelement (2) entgegen der Verriegelungsrichtung (8) bewegbar ist.

11. Verriegelungsvorrichtung nach Patentanspruch 10,
**dadurch gekennzeichnet, dass**
das Achsgelenk (16) eine Drehbewegung (9) entgegen der Verriegelungsrichtung (8) ermöglicht.

12. Verriegelungsvorrichtung nach einem der Patentansprüche 1 bis 11,
**dadurch gekennzeichnet, dass**
ein Federelement (18) vorgesehen ist, das eine Kraft in Verriegelungsrichtung (8) auf das vorstehende Rastelement (2) ausübt.

13. Verriegelungsvorrichtung nach einem der Patentansprüche 10 bis 12,
**dadurch gekennzeichnet, dass**
eine Aussparung (11, 14, 17) in der ersten Komponente (5) vorgesehen ist, die in ihren Abmessungen so ausgeführt ist, dass das vorstehende Rastelement (2) darin versenkbar ist.

## Claims

1. Locking device for locking a notebook computer housing, the notebook computer housing comprising a first component (5) and a second component (6) which is connected to the latter in a hinged manner, which components can be brought together in a locking direction, said locking device having
- a protruding latching element (2) on the first component (5), and
- a mating latching element (4) on the second component (6),
the latching element (2) and the mating latching element (4) interacting when the components (5 and 6) are in a locked position,
**characterized in that**
the protruding latching element (2) is movably mounted and a mount (10) for the protruding latching element (2) is set up in such a manner that the protruding latching element (2) yields if a force is exerted on the protruding latching element (2) in the locking direction.

2. Locking device according to Patent Claim 1,
**characterized in that**
the protruding latching element (2) yields at least to the extent that it terminates flush with a surface (19) of the first component (2).

3. Locking device according to either of Patent Claims 1 and 2,
**characterized in that**
the protruding latching element (2) is resiliently mounted.

4. Locking device according to one of Patent Claims 1 to 3,
**characterized in that**
the protruding latching element (2) is pivotably mounted.

5. Locking device according to one of Patent Claims 1 to 4,
**characterized in that**
a latching connection formed from the protruding latching element (2) and the mating latching element (4) can be released using an operating element (1) which is coupled to the protruding latching element (2) or the mating latching element (4).

6. Locking device according to one of Patent Claims 1 to 5,
**characterized in that**
the mating latching element (4) is a recess (4) in the second component (6).

7. Locking device according to one of Patent Claims 1 to 6,
**characterized in that**
the mating latching element (4) is a latching projection (7) on the second component.

8. Locking device according to one of Patent Claims 1 to 7,
**characterized in that**
provision is made of an axial joint (16) which is used to form the mount (10) for the protruding latching element (2).

9. Locking device according to one of Patent Claims 1 to 8,
**characterized in that**
the protruding latching element (2) is provided with an angled portion (20).

10. Locking device according to one of Patent Claims 1 to 9,
**characterized in that**
the mount (10) for the protruding latching element (2) is formed by a guide bush (12) in which the protruding latching element (2) can be moved counter to the locking direction (8).

11. Locking device according to Patent Claim 10,
**characterized in that**
the axial joint (16) allows a rotary movement (9) counter to the locking direction (8).

12. Locking device according to one of Patent Claims 1 to 11,
**characterized in that**
provision is made of a spring element (18) which exerts a force on the protruding latching element (2) in the locking direction (8).

13. Locking device according to one of Patent Claims 10 to 12,
**characterized in that**
a cutout (11, 14, 17) is provided in the first component (5), the dimensions of said cutout being such that the protruding latching element (2) can be recessed in it.

## Revendications

1. Dispositif de verrouillage pour le verrouillage d'un boîtier d'ordinateur bloc-notes, dans lequel le boîtier d'ordinateur bloc-notes comprend un premier composant (5) et un second composant (6) assemblé de manière rabattable à ce dernier, qui peuvent être réunis dans une direction de verrouillage, comprenant
- un élément d'encliquetage saillant (2) sur le premier composant (5), et
- un élément d'encliquetage opposé (4) sur le second composant (6),
dans lequel l'élément d'encliquetage (2) et l'élément d'encliquetage opposé (4) coopèrent dans une position verrouillée des composants (5 et 6),
**caractérisé en ce que** l'élément d'encliquetage saillant (2) est mobile et un appui (10) de l'élément d'encliquetage saillant (2) est conçu de telle manière que l'élément d'encliquetage saillant (2) soit escamoté lorsque l'on exerce une force dans la direction de verrouillage sur l'élément d'encliquetage saillant (2).

2. Dispositif de verrouillage selon la revendication 1, **caractérisé en ce que** l'élément d'encliquetage saillant (2) est escamoté au moins jusqu'au point où il est amené au niveau d'une surface (19) du premier composant (5).

3. Dispositif de verrouillage selon l'une quelconque des revendications 1 à 2, **caractérisé en ce que** l'élément d'encliquetage saillant (2) est monté sur ressort.

4. Dispositif de verrouillage selon l'une quelconque des revendications 1 à 3, **caractérisé en ce que** l'élément d'encliquetage saillant (2) est pivotant.

5. Dispositif de verrouillage selon l'une quelconque des revendications 1 à 4, **caractérisé en ce qu'**un assemblage par encliquetage formé par l'élément d'encliquetage saillant (2) et l'élément d'encliquetage opposé (4) peut être libéré au moyen d'un élément de commande (1), qui est couplé à l'élément d'encliquetage saillant (2) ou à l'élément d'encliquetage opposé (4).

6. Dispositif de verrouillage selon l'une quelconque des revendications 1 à 5, **caractérisé en ce que** l'élément d'encliquetage opposé (4) est un creux (4) dans le second composant (6).

7. Dispositif de verrouillage selon l'une quelconque des revendications 1 à 6, **caractérisé en ce que** l'élément d'encliquetage opposé (4) est une saillie d'encliquetage (7) sur le second composant.

8. Dispositif de verrouillage selon l'une quelconque des revendications 1 à 7, **caractérisé en ce qu'**il est prévu une articulation d'axe (16), qui forme l'appui (10) de l'élément d'encliquetage saillant (2).

9. Dispositif de verrouillage selon l'une quelconque des revendications 1 à 8, **caractérisé en ce que** l'élément d'encliquetage saillant (2) est pourvu d'un coude (20).

10. Dispositif de verrouillage selon l'une quelconque des revendications 1 à 9, **caractérisé en ce que** l'appui (10) de l'élément d'encliquetage saillant (2) est formé par une douille de guidage (12), dans laquelle l'élément d'encliquetage saillant (2) est mobile à l'encontre de la direction de verrouillage (8).

11. Dispositif de verrouillage selon la revendication 10, **caractérisé en ce que** l'articulation d'axe (16) permet un mouvement de rotation (9) à l'encontre de la direction de verrouillage (8).

12. Dispositif de verrouillage selon l'une quelconque des revendications 1 à 11, **caractérisé en ce qu'**il est prévu un élément de ressort (18), qui exerce une force dans la direction de verrouillage (8) sur l'élément d'encliquetage saillant (2).

13. Dispositif de verrouillage selon l'une quelconque des revendications 10 à 12, **caractérisé en ce qu'**il est prévu dans le premier composant (5) un évidement (11, 14, 17), dont les dimensions sont telles que l'élément d'encliquetage saillant (2) puisse s'y enfoncer.
